Europäisches Patentamt

European Patent Office

Office européen des brevets

(19)

(11) Veröffentlichungsnummer : **0 201 456**
**B1**

(12) **EUROPÄISCHE PATENTSCHRIFT**

(45) Veröffentlichungstag der Patentschrift :
15.03.89

(51) Int. Cl.⁴ : **B 30 B 15/02**

(21) Anmeldenummer : **86810176.7**

(22) Anmeldetag : **17.04.86**

(54) Presse mit einer oberen und einer unteren Platte zum Aufspannen eines Werkzeugpaketes.

(30) Priorität : 01.05.85 CH 1843/85

(43) Veröffentlichungstag der Anmeldung :
12.11.86 Patentblatt 86/46

(45) Bekanntmachung des Hinweises auf die Patenterteilung : 15.03.89 Patentblatt 89/11

(84) Benannte Vertragsstaaten :
AT DE FR GB IT NL SE

(56) Entgegenhaltungen :
DE—A— 1 427 098
DE—A— 3 025 156
FR—A— 2 243 778
GB—A— 1 116 665
GB—A— 2 019 277

(73) Patentinhaber : Feintool International Holding
Industriering 3
CH-3250 Lyss (CH)

(72) Erfinder : Wymann, Hans
Baumgartenweg 5
CH-3250 Lyss (CH)

(74) Vertreter : Weiss, Peter H., Dr. rer. nat.
Patentanwalt Dr. Peter H. Weiss Schlachthausstrasse
1
D-7700 Singen a.H. (DE)

## Beschreibung

Die Erfindung geht aus von einer Vorrichtung zum Herstellen oder Bearbeiten von Werkstücken mit einer oberen und einer unteren Platte zum Aufspannen eines aus einem Oberteil und einem Unterteil bestehenden Werkzeugpaketes, insbesondere eines Presswerkzeuges oder Feinschneidwerkzeuges, deren eine Platte als Pressenstössel wirkt, der zu bzw. weg von der anderen, als Pressentisch wirkenden Platte bewegbar ist, wobei sowohl in den Aufspannplatten als auch im Werkzeugoberteil und -unterteil jeweils mindestens eine T-Nut vorgesehen ist, und mit in der oberen Aufspannplatte oder im Werzeugoberteil und in der unteren Aufspannplatte eingebauten jeweils mindestens zwei Spannern mit achsgleich verlaufenden T-Nuten, die mit der jeweiligen T-Nut der Aufspannplatten oder des Werkzeugoberteiles durchgehend fluchten, wobei die T-Nut der oberen Aufspannplatte oder die T-Nut des Werkzeugoberteiles zwei voneinander entfernte Aussparungen aufweist.

Der grösste Teil der Stillstandzeiten bei Pressen wird durch Werkzeugwechsel verursacht. Das Gewicht der Werkzeuge ohne Zusatzplatten kann mehr als 500 kg betragen. Durch die automatische, hydraulische oder hydromechanische Werkzeugspannung können die Umrüstzeiten bei manuellem Werkzeugwechsel verringert werden. Es ist bekannt, zum schnellen Spannen und Entspannen des Werkzeuges auf dem Pressentisch bzw. Pressenstössel z. B. Schwenkspanner der Firma Hilma GmbH, D - 5912 Hilchenbach zu verwenden. Am Werkzeug sind T-förmige Ausnehmungen angebracht, in welche die Zuganker der Schwenkspanner durch Absenken der Pressenstösselplatte auf das Werkzeugoberteil eingeführt und um 90° geschwenkt werden, um in den T-Nuten des Werkzeuges einzurasten.

Ein grosser Nachteil dieser bekannten Schwenkspanner besteht darin, dass beim Defektwerden des Drehmechanismus der Schwenkspanner mit Zugankern die Spannverbindung nicht mehr gelöst werden kann, weil das Spannsystem von hinten der Presse nicht zugänglich ist. In einem solchen Fall muss das Werkzeug zerstört werden, weil es aus der Presse nicht anders ausgebaut werden kann.

Der im Anspruch 1 angegebenen Erfindung liegt die Aufgabe zugrunde, eine Vorrichtung der oben genannten Art zu schaffen, bei welcher die Gefahr der Zerstörung des Werkzeuges beim defekten Spannmechanismus eliminiert wird. Dies soll mit einfachen und platzsparenden Mitteln erzielt werden.

Die Aufgabe wird erfindungsgemäss durch die Merkmale des kennzeichnenden Teiles des Patentanspruches 1 gelöst.

Der Erfindungsgegenstand wird nachstehend anhand der Zeichnungen beispielsweise näher erläutert. Es zeigen :

Fig. 1 bis 5 schematische Darstellung der Ablaufstufen beim Wechseln und Spannen eines Werkzeugpaketes in einer Presse,

Fig. 6 eine Ansicht eines auf der unteren Aufspannplatte der Presse gespannten Werkzeugpaketes mit Zusatzplatten, wobei die Verriegelungs-Spannleiste in der T-Nut der oberen Aufspannplatte untergebracht ist,

Fig. 7 eine Seitenansicht im Schnitt gemäss der Figur 6,

Fig. 8 einen Längsschnitt der oberen Aufspannplatte der Presse mit einer Verriegelungs-Spannleiste in der eingefahrenen, jedoch nicht verriegelten Lage,

Fig. 9 einen Längsschnitt der oberen Aufspannplatte der Presse mit der Verriegelungs-Spannleiste in der verriegelten und festgespannten Lage,

Fig. 10 einen Schnitt entlang der Linie X-X der Figur 8,

Fig. 11 einen Schnitt entlang der Linie XI-XI der Figur 9,

Fig. 12 ein zersprengte perspektivische Darstellung eines in der Figur 8 eingekreisten Kupplungsteiles,

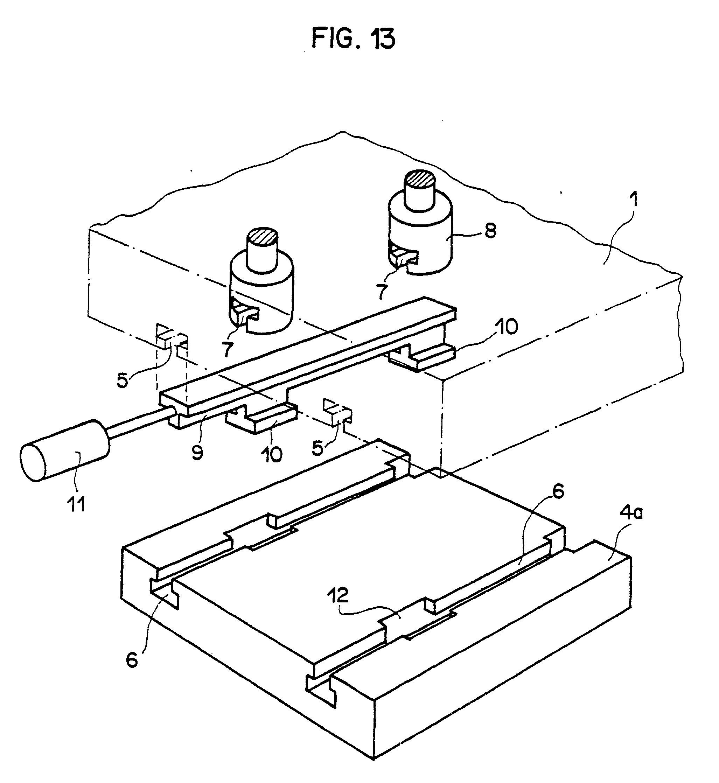

Fig. 13 eine zersprengte perspektivische Darstellung der Verriegelungs-Spannleiste, zweier oberen Spanner und einer oberen Zusatzplatte mit zwei T-Nuten,

Fig. 14 eine schematische Darstellung einer weiteren Ausführungsform,

Fig. 15 und 16 schematische Darstellungen weiterer Ausführungsformen,

Fig. 17 bis 20 schematische Darstellungen einer Variante mit horizontal verschiebbarem Werkzeugpaket.

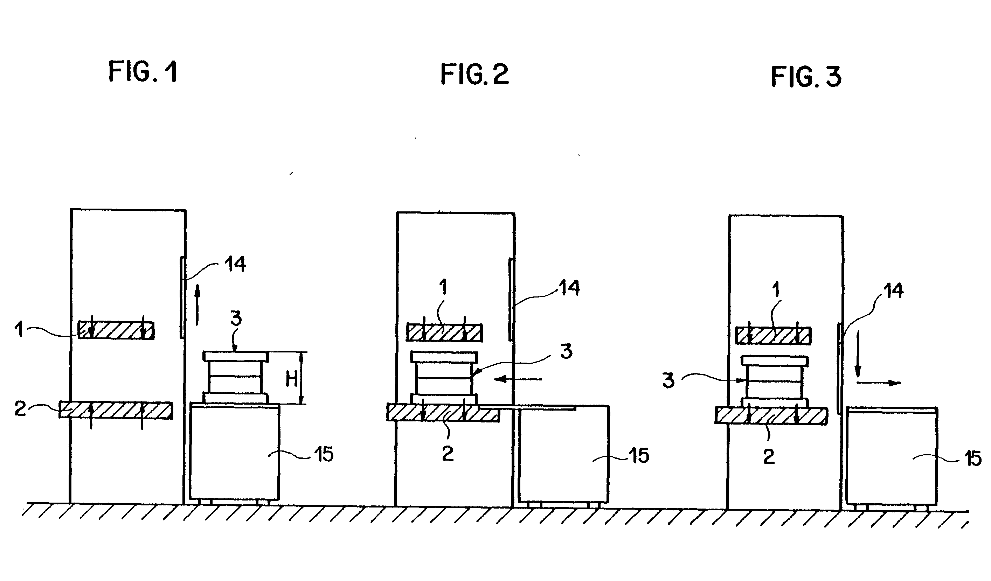

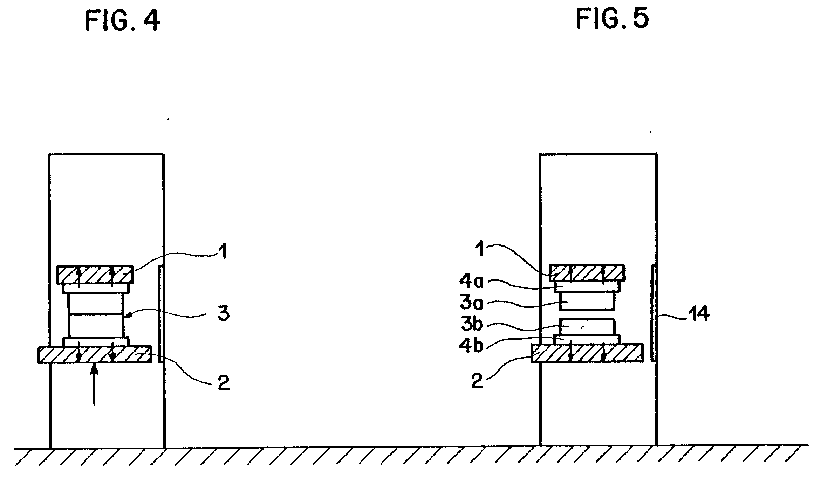

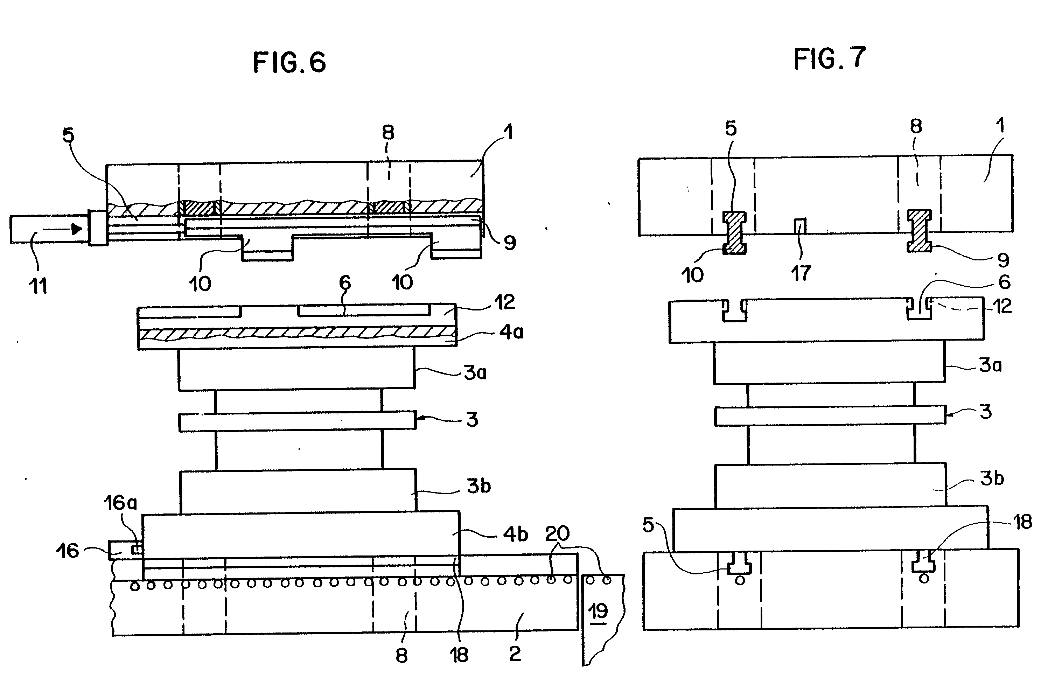

Ein Werkzeugpaket, das aus einem Werkzeugunterteil 3b und einem auf ihm lose aufgestellten Werkzeugoberteil 3a besteht, mit einer beliebigen Einbauhöhe H, wird mittels eines Wechselwagens 15 auf die Höhe der unteren Aufspannplatte 2 gebracht, wie aus den Figuren 1 bis 5 ersichtlich ist. Alternativ kann das Werkzeugpaket 3 auf einem Trägerpaar 19 abgelegt werden, wie aus der Figur 6 ersichtlich ist. Zu diesem Zweck wird das Werkzeugpaket 3 auf das Trägerpaar 19 mittels eines nicht dargestellten Kranes oder Hubstaplers gelegt. Dann wird das Werkzeugpaket 3 über eine Rollenbahn 20, die sowohl auf dem Trägerpaar 19 als auch auf der unteren Aufspannplatte 2 vorgesehen ist, bis zur Anlage an einem mit einem Näherungsschalter 16a versehenen Anschlag 16 verschoben werden. Das Trägerpaar 19 ist auf der unteren Aufspannplatte 2 abnehmbar eingehängt. Mit 1 ist die oberere Aufspannplatte bezeichnet.

Der Werkzeugoberteil 3a und der Werkzeugunterteil 3b sind mit jeweils einer Zusatzplatte 4a, 4b versehen. Auf den Zusatzplatten 4a, 4b ist die Vormontage vom Werkzeug und Zubehör ausserhalb der Presse möglich. Die als Pressenstössel wirkende untere Aufspannplatte 2 z. B. einer Feinschneidpresse befindet sich in ihrem unteren Totpunkt. Das heisst, dass die Einbauhöhe ab Flur immer konstant bleibt, auch bei einer ungleichen Werkzeughöhe H.

In der Figur 6 ist der Werkzeugunterteil 3b mit seiner unteren Zusatzplatte 4b schon in einer auf der unteren Aufspannplatte 2 gespannten Lage dargestellt. Dies geschieht dadurch, dass Spannleisten 18, die an der unteren Zusatzplatte 4b von unten befestigt sind, in die entsprechenden Nuten 5 der unteren Aufspannplatte 2 eingeschoben und mittels vierer in der unteren Aufspannplatte 2 vorgesehener Spanner 8 festgespannt wurden. Die Spannwirkung der unteren Spanner 8 wird durch den Näherungsschalter 16a im Anschlag 16 ausgelöst, wenn das eingeschobene Werkzeugpaket 3 an diesen Näherungsschalter 16a zum Anliegen kommt. Die Spannkraft wird über die Spannleisten 18 auf die untere Zusatzplatte 4b oder den unteren Werkzeugteil 3b übertragen.

Sowohl in den Aufspannplatten 1, 2 als auch im Werkzeugoberteil 3a und Werkzeugunterteil 3b oder in den an diesen Teilen befestigten Zusatzplatten 4a, 4b sind jeweils zwei parallele T-Nuten 5, 6 vorgesehen. In jeder Aufspannplatte 1, 2 sind vier Spanner 8 angeordnet, die ebenfalls mit T-Nuten 7 versehen sind. Die T-Nuten 7 der Spanner 8 fluchten durchgehend mit den T-Nuten 5 der Aufspannplatten 1, 2. Die in den Aufspannplatten 1, 2 integrierten Spanner 8 können hydraulisch oder mechanisch oder hydraulisch-mechanisch betätigt werden.

In den T-Nuten 5 der oberen Aufspannplatte 1 und den T-Nuten 7 der oberen Spanner 8 sind zwei Verriegelungs-Spannleisten 9 mit jeweils zwei voneinander entfernten Nocken 10 verschiebbar untergebracht. An ihren einen Enden sind die Verriegelungs-Spannleisten 9 mit Antriebsvorrichtungen 11 verbunden, mittels welcher sie von einer Endstellung in die andere Endstellung verstellbar sind. Die Antriebsvorrichtungen 11 können hydraulische, pneumatische, elektrische oder mechanische Antriebsvorrichtungen sein.

Beim « Hochfahren » der unteren als Pressenstössel wirkenden Spannplatte 2 mit dem Werkzeugpaket 3 befinden sich die Verriegelungs-Spannleisten 9 in der ersten, in der Figur 6 dargestellten Stellung. Wenn die obere Zusatzplatte 4a an der oberen Aufspannplatte 1 zum Anliegen kommt, wird der Näherungsschalter 17 in der oberen Aufspannplatte 1 (Figur 7) berührt, durch dessen Signal die Antriebsvorrichtung 11 betätigt wird. Die Nocken 10, die in dieser ersten Endstellung der Verriegelungs-Spannleisten 9 in jeweils zwei Aussparungen 12 der T-Nuten 6 der oberen Zusatzplatte 4a eingetaucht sind, werden durch Verschieben der Leisten 9 durch die Antriebsvorrichtungen 11 in die zweite Stellung versetzt, in welcher sie in den T-Nuten 6 der oberen Zusatzplatte 4a eingreifen. Nun wird das Festspannen der oberen Zusatzplatte 4a mit dem Werkzeugoberteil 3a durch die oberen Spanner 8 eingeleitet.

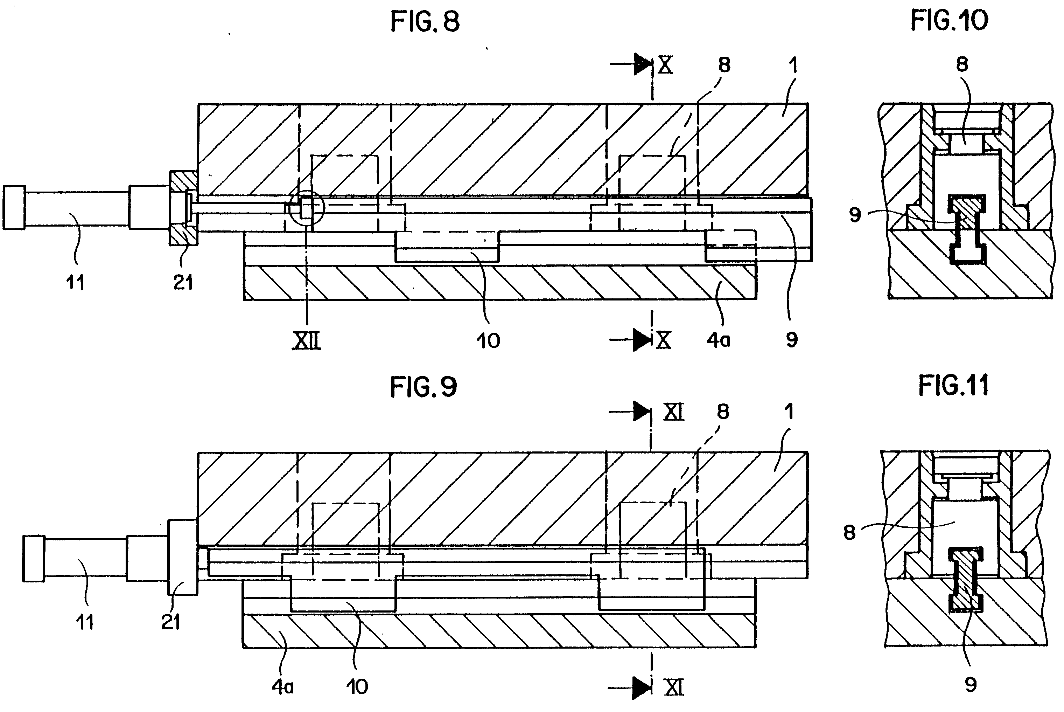

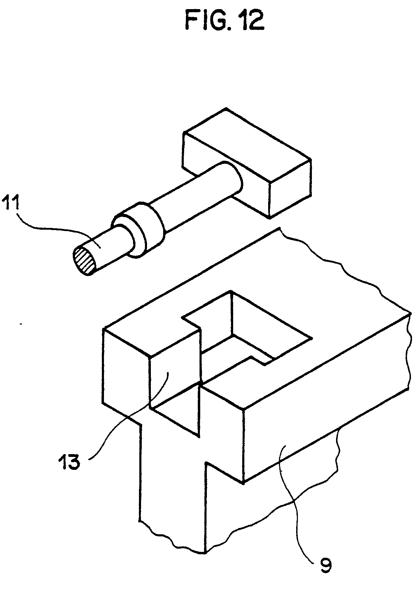

In den Figuren 8 und 10 ist die Verriegelungs-Spannleiste 9 in der eingefahrenen, aber nicht verriegelten Lage, jedoch vor dem Einleiten des Festspannens durch die oberen Spanner 8 dargestellt. In den Figuren 9 und 11 ist dann die Verriegelungs-Spannleiste 9 in der verriegelten und festgespannten Lage in der oberen Aufspannplatte 1 dargestellt. Die geringe Höhenverschiebung der Verriegelungs-Spannleiste 9 gegenüber der fest montierten Antriebsvorrichtung 11 beim Festspannen wird durch einen Kupplungsteil 13 (siehe Figur 12) ermöglicht, der auch in der Figur 8 eingekreist dargestellt ist. Die Endlagenkontrolle 21 für beide Endstellungen der Verriegelungs-Spannleisten 9 ist im Schnitt ebenfalls in Figur 8 dargestellt.

Je nach der Bauart der Presse kann die obere Aufspannplatte 1 auch als Pressenstössel funktionieren. Auch in einem solchen Fall werden die Verriegelungs-Spannleisten 9 in den Nuten 5 der oberen Aufspannplatte 1 eingebaut. Es ist auch bei kleineren Pressen möglich, anstelle von jeweils zwei Nuten 5 in den Aufspannplatten 1, 2 und anstelle von zwei Verriegelungs-Spannleisten 9 nur deren jeweils eine zu verwenden.

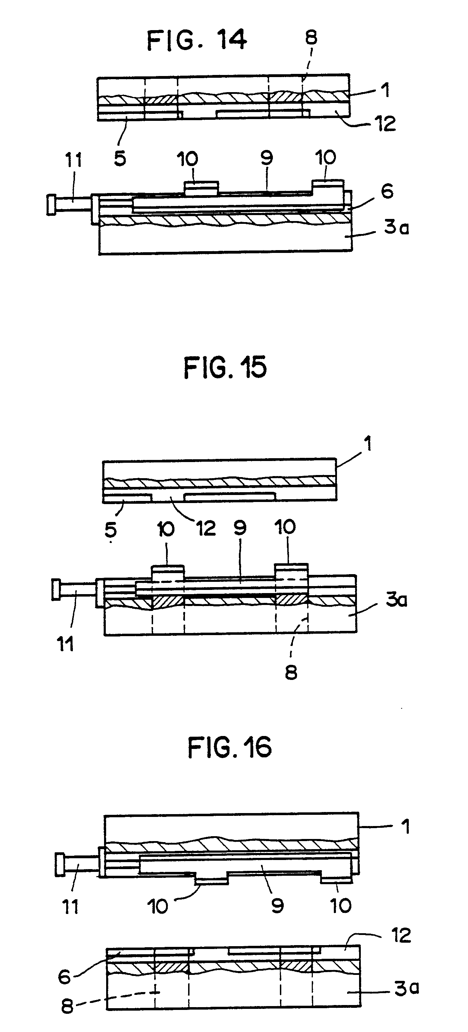

In der Figur 14 ist eine Ausführungsform schematisch dargestellt, bei welcher die oberen Spanner 8 in der oberen Aufspannplatte 1 der Presse eingebaut sind, wobei die Verriegelungs-Spannleiste 9 mit zwei Nocken 10 mit der zuständigen Antriebsvorrichtung 11 in der T-Nut 6 des Werkzeugoberteiles 3a verschiebbar untergebracht ist. Die T-Nut 5 sowie die Aussparungen 12, in welche die Nocken 10 einführbar sind, sind in der oberen Aufspannplatte 1 vorgesehen.

Die Ausführungsform nach der Figur 15 ähnelt derjenigen nach der Figur 14 mit der Ausnahme der oberen Spanner 8, die anstelle in der oberen Aufspannplatte 1 im Werkzeugoberteil 3a eingebaut sind.

Bei der Ausführungsform nach der Figur 16 ist die Verriegelungs-Spannleiste 9 mit den Nocken 10 in der Nut 5 der oberen Aufspannplatte 1 untergebracht. Sie ist in dieser Nut 5 mittels einer Antriebsvorrichtung 11 verschiebbar. Die oberen Spanner 8 sowie die T-Nut 6 mit den Aussparungen 12, in welche die Nolken 10 einführbar sind, sind in diesem Falle im Werkzeugoberteil 3 vorgesehen.

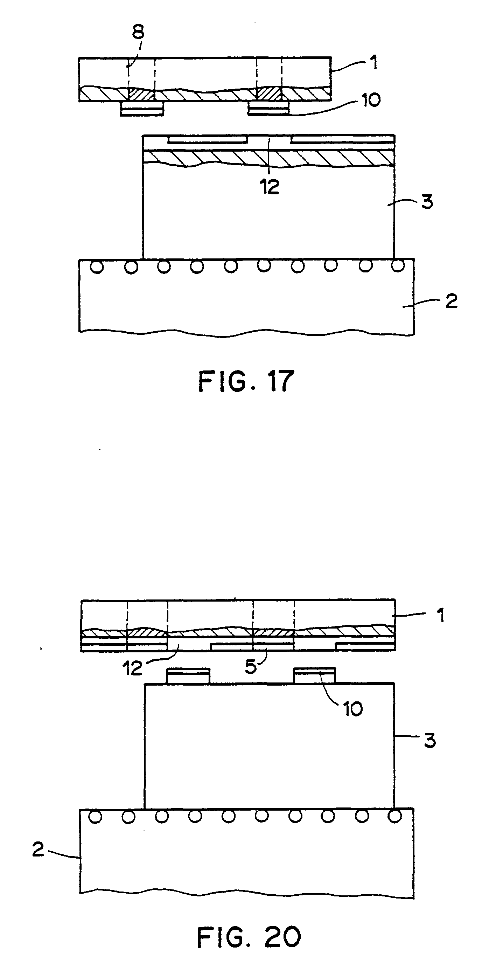

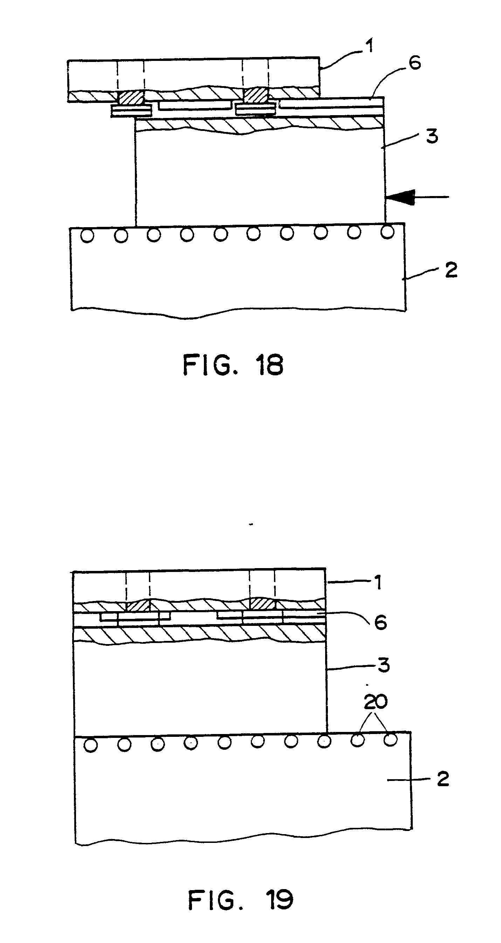

In den Figuren 17 bis 20 ist eine Variante schematisch dargestellt bei welcher die Verriegelungs- und Spannmittel 10 entweder in der T-Nut 5 der oberen Aufspannplatte 1 oder in der T-Nut 6 des Werkzeugoberteiles 3a ortsfest untergebracht sind. Hier wird das Werkzeugpaket 3 in horizontaler Richtung verschoben, damit die in die Aussparungen 12 eingeführten Mittel 10 in der Nut 5 oder 6 eingeschoben werden können, wonach das Festspannen des Werkzeugoberteiles der Werkzeugpaketes 3 an der oberen Aufspannplatte 1 erfolgt.

Bei Störungen im Verschiebe- oder Spannmechanismus der Presse ist das Lösen des Werkzeuges unter allen Umständen möglich, weil die Verriegelungs- und Spannmittel bzw. Die Schiebeleisten mit ihren Antriebsvorrichtungen gut zugänglich sind ; dadurch wird die bisher übliche Zerstörung des Werkzeuges eliminiert. Gleichzeitig wird das Festspannen von Werkzeugen beliebiger Höhen ohne Voreinstellung der Presse ermöglicht. Der Werkzeugwechsel wird gegenüber den anderen bekannten Systemen verkürzt. Der Aufwand an Steuerung und Ueberwachung ist gering.

## Patentansprüche

1. Vorrichtung zum Herstellen oder Bearbeiten von Werkstücken mit einer oberen (1) und einer unteren (2) Platte zum Aufspannen eines aus einem Oberteil (3a) und einem Unterteil (3b) bestehenden Werkzeugpaketes (3), insbesondere eines Preßwerkzeuges oder Feinschneidwerkzeuges, deren eine Platte als Stößel wirkt, der zu bzw. weg von der anderen, als Tisch wirkenden Platte bewegbar ist, wobei sowohl in den Aufspannplatten (1, 2) als auch im Werkzeugoberteil (3a) und -unterteil (3b) jeweils mindestens eine T-Nut (5, 6) vorgesehen ist, und mit in der oberen Aufspannplatte (1) oder im Werkzeugoberteil (3a) und in der unteren Aufspannplatte (2) eingebauten jeweils mindestens zwei Spannern (8) mit achsgleich verlaufenden T-Nuten (7), die mit der jeweiligen T-Nut (5, 6) der Aufspannplatten (1, 2) oder des Werkzeugoberteils (3a) durchgehend fluchten, wobei die T-Nut (5) der oberen Aufspannplatte (1) oder die T-Nut (6) des Werkzeugoberteils (3a) zwei voneinander entfernte Aussparungen (12) aufweist, gekennzeichnet durch mindestens zwei in der T-Nut (5) der oberen Aufspannplatte (1) oder in der T-Nut (6) des Werkzeugoberteils (3a) im Abstand voneinander untergebrachte, von den Spannern (8) baulich getrennte Verriegelungs- und Spannmittel (10), die dazu bestimmt sind, die Aussparungen (12) der T-Nut (6) des Werkzeugoberteils (3a) bzw. in die Aussparung (12) der T-Nut (5) der oberen Spannplatte (1) eingeführt und anschließend in dieser T-Nut (6, 5) außerhalb der Aussparungen (12) verriegelt und festgespannt zu werden.

2. Vorrichtung nach Patentanspruch 1, dadurch gekennzeichnet, daß die Verriegelungs- und Spannmittel (10) Nocken einer Schiebeleiste (9) sind, die in der T-Nut (5) der oberen Aufspannplatte (1) oder in der T-Nut (6) des Werkzeugoberteils (3a) mittels einer Antriebsvorrichtung (11) von einer Endstellung in die andere Endstellung verstellbar sind, wobei die beiden Nocken aus der T-Nut (6, 5) herausragen und dazu bestimmt sind, in der einen Endstellung in die Aussparungen (12) der T-Nut (6) des Werkzeugoberteils (3a) bzw. in die Aussparungen (12) der T-Nut (5) der oberen Aufspannplatte (1) einzutauchen, wenn der Werkzeugoberteil (3a) an der oberen Aufspannplatte (1) zum Anliegen kommt, und in der anderen Endstellung in dieser T-Nut (6, 5) außerhalb der Aussparungen (12) einzugreifen.

3. Vorrichtung nach Patentanspruch 1, dadurch gekennzeichnet, daß die Verriegelungs- und Spannmittel (10) in der T-Nut (5) der oberen Aufspannplatte (1) oder in der T-Nut (6) des Werkzeugoberteils (3a) ortsfest untergebracht sind, wobei das Werkzeugpaket (3) auf der unteren Aufspannplatte (2) von einer Endstellung in die andere Endstellung horizontal verstellbar ist, und die beiden Verriegelungs- und Spannmittel (10) dazu bestimmt sind, in die einen Endstellung in die Aussparungen (12) der T-Nut (6) des Werkzeugoberteils (3a) bzw. die Aussparungen (12) der T-Nut (5) der oberen Aufspannplatte (1) einzutauchen, wenn der Werkzeugoberteil (3a) an der oberen Aufspannplatte (1) zum Anliegen kommt, und in der anderen Endstellung in dieser T-Nut (5, 6) außerhalb der Aussparungen (12) einzugreifen.

4. Vorrichtung nach Patentanspruch 2, wobei sowohl am Werkzeugoberteil (3a) als auch am Werkzeugunterteil (3b) jeweils eine Zusatzplatte (4a, 4b) mit mindestens einer T-Nut (6) angeordnet ist, dadurch gekennzeichnet, daß die Schiebeleiste (9) in der T-Nut (5) der oberen Aufspannplatte (1) oder in der T-Nut (6) der oberen Zusatzplatte (4a) untergebracht ist.

5. Vorrichtung nach den Patentansprüchen 1 und 4, dadurch gekennzeichnet, daß die Form jedes Verriegelungs- und Spannmittels (10) der Form der T-Nut (6, 5) des Werkzeugoberteiles (3a) bzw. seiner Zusatzplatte (4a) oder der T-Nut (5) der oberen Aufspannplatte (1) entspricht.

6. Vorrichtung nach Patentanspruch 2, dadurch gekennzeichnet, daß in der Schiebeleiste (9) ein Kupplungsteil (13) für Höhenverschiebungen der Schiebeleiste (9) gegenüber der Antriebsvorrichtung (11) während des Festspannens des Werkzeugoberteils (3a) an der oberen Auspannplatte (1) vorgesehen ist.

## Claims

1. A device for producing or machining workpieces with an upper plate (1) and a lower plate (2) for clamping a stack of tools (3) consisting of an upper part (3a) and a lower part (3b), in particular of a press tool or precision cutting tool, one plate of which acts as ram which can be moved towards or away from the other plate acting as platen, wherein at least one respective T-groove (5, 6) is provided in the clamping plates (1, 2) as well as in the upper tool part (3a) and lower tool part (3b), and with at least two respective tighteners (8) with T-grooves (7) running along the same axis, which are fitted in the upper clamping plate (1) or in the upper tool part (3a) and in the lower clamping plate (2) and are continuously aligned with the respective T-groove (5, 6) in the clamping plates (1, 2) or the upper tool part (3a), the T-groove (5) in the upper clamping plate (1) or the T-groove (6) in the upper tool part (3a) having two mutually spaced apertures (12), characterised by at least two locking and clamping means (10) which are arranged at a distance frome one another in the T-groove (5) in the upper clamping plate (1) or in the T-groove (6) in the upper tool part (3a), are constructionally separated by the tighteners (8) and are intended to be introduced into the apertures (12) in the T-groove (6) of the upper tool part (3a) and in the aperture (12) in the T-groove (5) in the upper clamping plate (1) and then to be locked and tightened in this T-groove (6, 5) outside the apertures (12).

2. A device according to claim 1, characterised in that the locking and clamping means (10) are cams of a sliding rail (9) which can be moved in the T-groove (5) in the upper clamping plate (1) or in the T-groove (6) in the upper tool part (3a) by means of a driving device (11) from one end position into the other end position, the two cams projecting from the T-groove (6, 5) and being intended, in one end position, to dip into the apertures (12) in the T-groove (6) in the upper tool part (3a) and into the apertures (12) in the T-groove (5) in the upper clamping plate (1) when the upper tool part (3a) comes into contact with the upper clamping plate (1) and, in the other end position, to engage in this T-groove (6, 5) outside the apertures (12).

3. A device according to claim 1, characterised in that the locking and clamping means (10) are arranged stationarily in the T-groove (5) in the upper clamping plate (1) or in the T-groove (6) in the upper tool part (3a), the tool stack (3) being horizontally movable on the lower clamping plate (2) from one end position into the other end position, and the two locking and clamping means (10) being intended, in one end position, to dip into the apertures (12) in the T-groove (6) in the upper tool part (3a) and the apertures (12) in the T-groove (5) in the upper clamping plate (1) when the upper tool part (3a) comes into contact with the upper clamping plate (1) and, in the other end position, to engage in this T-groove (5, 6) outside the apertures (12).

4. A device according to claim 2, wherein a respective additional plate (4a, 4b) with at least one T-groove (6) is arranged on the upper tool part (3a) as well as on the lower tool part (3b), characterised in that the sliding rail (9) is arranged in the T-groove (5) in the upper clamping plate (1) or in the T-groove (6) in the upper additional plate (4a).

5. A device according to claims 1 and 4, characterised in that the shape of each locking and clamping means (10) corresponds to the shape of the T-groove (6, 5) in the upper tool part (3) or in its additional plate (4a) or the T-groove (5) in the upper clamping plate (1).

6. A device according to claim 3, characterised in that a coupling member (13) for displacements in height by the sliding rail (9) relative to the driving device (11) during tightening of the upper tool part (3a) on the upper clamping plate (1) is provided in the sliding rail (9).

**Revendications**

1. Dispositif pour fabriquer ou usiner des pièces avec un plateau supérieur (1) et un plateau inférieur (2) pour fixer un jeu d'outil (3) se composant d'une partie supérieure (3a) et d'une partie inférieure (3b), en particulier un jeu d'outil de presse ou d'outils de découpe fine, dont un plateau agit comme poinçon, mobile en se rapprochant ou en s'éloignant de l'autre plateau agissant comme table, une rainure en T étant à cette occasion prévue aussi bien dans les plateaux de fixation (1, 2) qu'également dans la partie supérieure d'outil (3a) et la partie inférieure d'outil (3b), et avec chaque fois au moins deux éléments de fixation (8) à rainure en T (7) se développant suivant le même axe, montés dans le plateau de fixation supérieur (1) ou dans la partie supérieure d'outil (3a) et dans le plateau de fixation inférieur (2), rainures en T (7) alignées de bout en bout avec les rainures en T (5, 6) correspondantes des plateaux de fixation (1, 2) ou de la partie supérieure d'outil (3a), à l'occasion de quoi la rainure en T (5) du plateau de fixation supérieur (1) ou la rainure en T (6) de la partie supérieure d'outil (3a) présente deux évidements (12) à distance l'un de l'autre, caractérisé par au moins deux moyens séparés de verrouillage et de fixation (10), logés à distance l'un de l'autre dans la rainure en T (5) du plateau de fixation supérieur (1) ou dans la rainure en T (6) de la partie supérieure d'outil (3a), séparés structurellement des éléments de fixation (8), moyens (10) qui sont déterminés pour être introduits dans les évidements (12) de la rainure en T (6) de la partie supérieure d'outil (3a), respectivement dans l'évidement (12) de la rainure en T (5) du plateau de fixation supérieur (1) et immédiatement après être verrouillés et bloqués dans cette rainure (6, 5) à l'extérieur des évidements (12).

2. Dispositif selon la revendication 1, caractérisé en ce que les moyens de verrouillage et de fixation (10) sont des cames d'un coulisseau (9) ; cames susceptibles d'être déplacées dans la rainure en T (5) du plateau de fixation supérieur (1) ou dans la rainure en T (6) de la partie supérieure d'outil (3a) au moyen d'un dispositif d'entraînement (11), passant d'une position finale dans l'autre position finale, les deux cames émergeant à cette occasion des rainures en T (6, 5) et étant déterminées pour plonger, dans une des positions finales dans les évidements (12) de la rainure en T (6) de la partie supérieure d'outil (3a), respectivement dans les évidements (12) de la rainure en T (5) du plateau de fixation supérieur (1), lorsque la partie supérieure d'outil (3a) vient en appui sur le plateau de fixation supérieur (1) et pour venir en prise dans l'autre position finale dans cette rainure en T (6, 5), à l'extérieur des évidements (12).

3. Dispositif selon la revendication 1, caractérisé en ce que les moyens de verrouillage et de fixation (10) sont logés fixes dans la rainure en T (5) du plateau de fixation supérieur (1) ou dans la rainure en T (6) de la partie supérieure d'outil (3a), le jeu d'outils (3) étant à cette occasion susceptible d'être déplacé horizontalement sur le plateau de serrage inférieur (2) en allant d'une position finale à l'autre position finale, et les deux moyens de verrouillage et de fixation (10) étant déterminés pour plonger dans une position finale dans les évidements (12) de la rainure en T (6) de la partie supérieure d'outil (3a), respectivement dans les évidements (12) de la rainure en T (5) du plateau de fixation supérieur (1), lorsque la partie supérieure d'outil (3a) vient en appui sur le plateau de fixation supérieur (1) et pour venir en prise dans l'autre position finale dans cette rainure en T (5, 6) à l'extérieur des évidements (12).

4. Dispositif selon la revendication 2, dans lequel un plateau supplémentaire (4a, 4b) avec au moins une rainure en T (6) est chaque fois disposé aussi bien sur la partie supérieure d'outil (3a) que sur le partie inférieure d'outil (3b), caractérisé en ce que le coulisseau est logé dans la rainure en T (5) du plateau de fixation supérieure (1) ou dans la rainure en T (6) du plateau supérieur supplémentaire (4a).

5. Dispositif selon les revendications 1 et 4, caractérisé en ce que la forme de chaque élément de verrouillage et de fixation (10) correspond à la forme de la rainure en T (6, 5) de la partie supérieure d'outil (3a), respectivement de son plateau supplémentaire (4a) ou de la rainure en T (5) du plateau de fixation supérieur (1).

6. Dispositif selon la revendication 2, caractérisé en ce qu'une partie d'accouplement (13) pour déplacer en hauteur le coulisseau (9) par rapport au dispositif d'entraînement (11) pendant la fixation de la partie supérieure d'outil (3a) est prévue sur le plateau de fixation supérieur (1).

# FIG. 1    FIG. 2    FIG. 3

EP 0 201 456 B1

EP 0 201 456 B1

FIG. 4

FIG. 5

1

3

2

1

4a

3a

3b

4b

2

14

# FIG.6

# FIG.7

EP 0 201 456 B1

FIG.10

FIG.11

FIG.8

FIG.9

FIG. 12

11

13

9

## FIG. 13

FIG. 14

FIG. 15

FIG. 16

FIG. 17

FIG. 20

FIG. 18

FIG. 19

9